Europäisches Patentamt

European Patent Office

Office européen des brevets

(11) Veröffentlichungsnummer: **0 348 677**
**A2**

## (12) EUROPÄISCHE PATENTANMELDUNG

(21) Anmeldenummer: 89109800.6

(22) Anmeldetag: 31.05.89

(51) Int. Cl.4: **H04R 1/08 , H04B 1/08**

(30) Priorität: 25.06.88 DE 3821514

(43) Veröffentlichungstag der Anmeldung:
**03.01.90 Patentblatt 90/01**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Dreher, Alexander**
**Am Elsenberg 4**
**D-7730 VS-Marbach(DE)**

(54) **Teleskopantenne mit integriertem Mikrophon.**

(57) Teleskopantenne mit integriertem Mikrophon eines Gerätes mit HF-Empfangsteil und Recorder

Moderne Radiokassettenrecorder sind z.B. meist stereotüchtig und sind mit zwei Mikrophonen an der Gehäusefrontseite ausgestattet. Es sind auch Geräte gehobener Ausstattung mit zusätzlichen Anschluß-möglichkeiten für externe Mikrophone versehen. Mit den im Gehäuse integrierten Mikrophonen sind die Richtcharakteristik störend und der erzielbare Stereoeffekt begrenzt. Das zu verbessern war die Aufgabe, die der Erfindung zugrunde lag.

Nach der Erfindung ist im Kopf der Teleskopantenne ein Mikrophon integriert. Sind zwei Teleskopantennen mit je einem Mikrophon vorgesehen, ist es möglich durch die Bewegbarkeit der Antenne eine bessere Aufnahmecharakteristik und eine klare Rechts-Links-Trennung für einen optimierten Stereoeffekt zu erreichen und auch Laufwerknebengeräusche in den Aufnahmen zu reduzieren.

Radiokassettenrecorder, Geräte mit HF-Empfangsteil und Recorder.

EP 0 348 677 A2

## Teleskopantenne mit integriertem Mikrophon.

Die Erfindung betrifft eine Teleskopantenne für ein Gerät mit HF-Empfangsteil und und Recorder für Video und/oder Audio-Signale. .

Derartige Geräte z.B. Radiokassettenreocrder besitzen üblicherweise im Gehäuse an der Frontseite ein oder zwei eingebaute Mikrophone.

Da Mikrophone eine Richtwirkung besitzen, ist es erforderlich das Gerät zur Aufnahme dem akustischen Geschehen zuzudrehen, wenn keine Anschlußmöglichkeit für ein oder zwei externe Mikrophone vorgesehen sind.

Der Erfindung lag die Aufgabe zugrunde, Mikrophonaufnahmen bei derartigen Geräten zu verbessern ohne auf externe Mikrophone angeweisen zu sein.

Die Aufgabe wird gemäß dem Hauptanspruch gelöst. Weitere Einzelheiten sind einem Unteranspruch zu entnehmen.

Vorteilhafterweise läßt sich durch die drehbare, vertikal schwenkbare und in ihrer Länge variable Antenne eine bessere Aufnahmecharakteristik erzielen. Wenn zwei Teleskopantennen am Gerät vorgesehen sind, können bei Ausstattung beider mit Mikrophonen bei Geräten, die Stereo-Aufnahme und -Wiedergabe erlauben, bessere Stereo-Effekte erreicht werden, als bei Geräten mit im Gehäuse integrierten Mikrophonen. Hinzu kommt der Vorteil, daß bei erfindungsgemäßer Mikrophon-Anordnung Laufwerk-Geräusche des Kassettenrecorders weniger leicht mit aufgenommen werden.

## Ansprüche

1. Teleskopantenne für ein Gerät mit HF-Empfangsteil und Recorder für Video- und/oder Audio-Signale, **dadurch gekennzeichnet**, daß im Kopfteil der Teleskopantenne ein Mikrophon integriert ist.

2. Teleskopantenne nach Anspruch 1, **dadurch gekennzeichnet**, daß das Bandgerät für Stereo-Aufnahme und -Wiedergabe eingerichtet ist und das HF-Empfangsteil zwei Teleskopantennen mit je einem integrierten Mikrophon besitzt.